# FASCICULE DE BREVET EUROPEEN

(11) **EP 3 462 920 B1**
(45) Date de publication et mention de la délivrance du brevet: **10.06.2020**
(21) Numéro de dépôt: 17729528.4
(22) Date de dépôt: 22.05.2017
(51) Int. Cl.: A23N 17/00, A01K 5/00, A01K 5/01

(54) **APPAREIL DE PREPARATION D'ALIMENT POUR ANIMAUX**
TIERFUTTERZUBEREITUNGSEINRICHTUNG
DEVICE FOR THE PREPARATION OF ANIMAL FEED

(30) Priorité: 23.05.2016 FR 1654600
(43) Date de publication de la demande: 10.04.2019
(73) Titulaire: SEB S.A., 69130 Ecully (FR)
(72) Inventeur: MORIN, Gilles, 69290 Pollionaux (FR)
(74) Mandataire: Soares, Luis Filipe
(86) Numéro de dépôt international: PCT/FR2017/051259
(87) Numéro de publication internationale: WO 2017/203150

(56) Documents cités:
- BE-A- 527 389
- DE-U1-202008 001 482
- FR-A1- 2 400 333
- FR-A1- 2 785 767
- US-A1- 2009 173 282

## Description

La présente invention concerne de manière générale une enceinte de mélange d'un appareil de préparation d'aliment pour animaux. L'invention concerne aussi un appareil de préparation d'aliment pour animaux.

Il est connu dans l'art antérieur des dispositifs de préparation d'aliment pour animaux domestiques, tels que celui décrit par exemple dans le document US8511519B2. En contrepartie, ce système présente notamment l'inconvénient de ne proposer que des aliments sous forme solide, ce qui peut ne pas convenir à certains animaux. Un autre dispositif est connu de US-2009/0173282-A1.

Un but de la présente invention est de répondre aux inconvénients de l'art antérieur mentionnés ci-dessus et en particulier, tout d'abord, de proposer une enceinte de mélange pour un appareil de préparation d'aliment pour animaux sous forme de pâte ou de pâtée, mais l'appareil devant présenter une bonne ergonomie et un entretien facile.

Pour cela un premier aspect de l'invention concerne un appareil de préparation d'aliment pour animaux, comprenant :
- un boîtier,
- des moyens de stockage d'un aliment déshydraté,
- des moyens de stockage d'un liquide tel que de l'eau,
- une enceinte de mélange agencée pour recevoir une portion d'aliment déshydraté et une portion de liquide,
- des moyens de mélange mobiles agencés dans l'enceinte de mélange pour mélanger la portion d'aliment déshydraté et la portion de liquide pour former une ration alimentaire sous forme de pâte,
- un récipient de consommation agencé pour recevoir la ration alimentaire, dans lequel l'enceinte de mélange est amovible par rapport à l'appareil de préparation,
   caractérisé en ce que l'enceinte de mélange, une fois montée sur l'appareil de préparation :
   - est rotative par rapport à l'appareil de préparation pour aller d'une position de mélange de la ration alimentaire à une position de distribution de la ration alimentaire, et
   - présente une portion de préhension qui est agencée hors de l'appareil de préparation, en protubérance par rapport au boîtier. L'appareil de préparation d'aliment selon la présente mise en œuvre comprend une enceinte de mélange amovible, ce qui rend aisé le nettoyage de cette partie qui sera salie à chaque utilisation. Cependant, l'enceinte de mélange est mobile lors de la préparation des aliments, mais conserve toutefois une partie en saillie par rapport au boîtier de l'appareil, pour permettre une préhension sans avoir à ouvrir de capot ou de trappe de sécurité. L'invention propose alors un appareil sans dispositif mobile de sécurité et une bonne ergonomie.

Avantageusement, la portion de préhension présente une symétrie de révolution.

Avantageusement, la portion de préhension est exempte de créneaux ou protubérances ponctuelles. Une telle mise en œuvre évite le risque de coincement car s'il n'y a pas de créneaux ou protubérances, il n'y a pas de mur ou face mobile qui pourrait coincer un doigt contre une partie fixe du boîtier, lors du passage de la position de mélange à la position de distribution.

Avantageusement, l'enceinte de mélange comprend un orifice, et dans lequel :
- lorsque l'enceinte de mélange est dans la position de mélange, l'orifice est agencé en partie supérieure de l'enceinte de mélange,
- lorsque l'enceinte de mélange est dans la position de distribution, l'orifice est agencé en partie inférieure de l'enceinte de mélange. Ainsi, il est possible de verser par gravité des ingrédients à mélanger, et d'expulser par gravité la pâtée obtenue après mélange, à travers le même orifice.

Avantageusement, l'enceinte de mélange comprend un ergot, l'appareil de préparation comprenant une fente agencée pour guider l'ergot lors du montage de l'enceinte de mélange sur l'appareil de préparation, pour forcer le montage de l'enceinte de mélange avec l'orifice agencé en partie supérieure de l'enceinte de mélange. Ainsi, l'enceinte de mélange est directement montée en position de mélange, la préparation peut démarrer immédiatement.

Avantageusement, l'appareil de préparation comprend une gorge circulaire pour permettre la rotation de l'ergot et prévenir tout démontage de l'enceinte de mélange.

Avantageusement, l'enceinte de mélange comprend une portion dentée, et l'appareil de préparation comprend des moyens d'entraînement de l'enceinte de mélange, avec un pignon agencé pour s'engager avec la portion dentée. L'enceinte de mélange comprend elle-même une partie des moyens d'entraînement, ce qui permet de simplifier l'architecture globale.

Avantageusement, l'appareil de préparation comprend une pale de mélange agencée dans l'enceinte de mélange et mobile en rotation par rapport à l'enceinte de mélange.

Avantageusement, l'enceinte de mélange comprend deux ancrages formant une liaison pivot avec la pale de mélange.

Avantageusement, l'appareil de préparation comprend un entraîneur agencé pour entrainer la pale de mélange en rotation, et un des ancrages de l'enceinte de mélange est agencé pour recevoir ledit entraîneur.

Avantageusement, l'enceinte de mélange comprend un couvercle.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une pale de mélange agencée pour être reçue dans une enceinte de mélange d'un appareil de préparation selon la présente invention, vue de côté ;
- la figure 2 représente la pale de mélange de la figure 1, vue selon la direction II de la figure 1 ;
- la figure 3 représente la pale de mélange de la figure 1, vue selon la direction III de la figure 1 ;
- la figure 4 représente une coupe de la pale de mélange de la figure 1, selon l'axe IV-IV de la figure 1 ;
- la figure 5a représente la pale de mélange de la figure 1 placée dans l'enceinte de mélange de l'appareil de préparation selon la présente invention ;
- la figure 5b représente un pot faisant partie de l'enceinte de mélange de la figure 5a ;
- la figure 6 représente une vue en perspective d'un appareil de préparation d'aliment pour animaux selon la présente invention accueillant l'enceinte de mélange de la figure 5a ;
- la figure 7 représente une coupe de l'appareil de préparation d'aliment pour animaux de la figure 6 ;
- la figure 8 représente une vue en perspective de dessous d'un logement de l'appareil de préparation de la figure 6 ;
- la figure 9 représente une vue en perspective d'une zone de distribution de l'appareil de préparation de la figure 6 ;
- la figure 10 représente une vue de l'arrière de l'appareil de préparation de la figure 6 ;
- la figure 11 représente une vue éclatée de l'appareil de préparation de la figure 6 ;
- la figure 12 représente une vue détaillant une cartouche amovible de l'appareil de préparation de la figure 6.

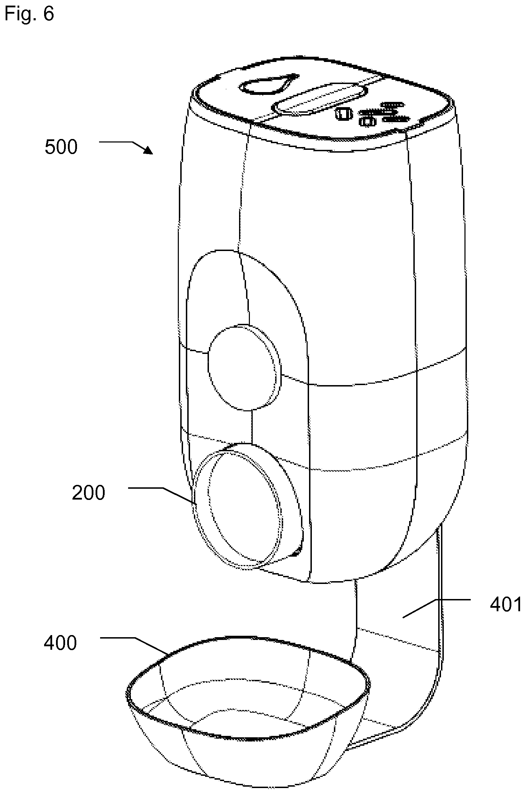

Les figures 6, 10, 11, et 12 représentent des vues générales d'un appareil de préparation 500 selon la présente invention, qui comporte un corps principal soutenu par une équerre 401, qui soutient également un récipient de consommation 400 (une gamelle par exemple).

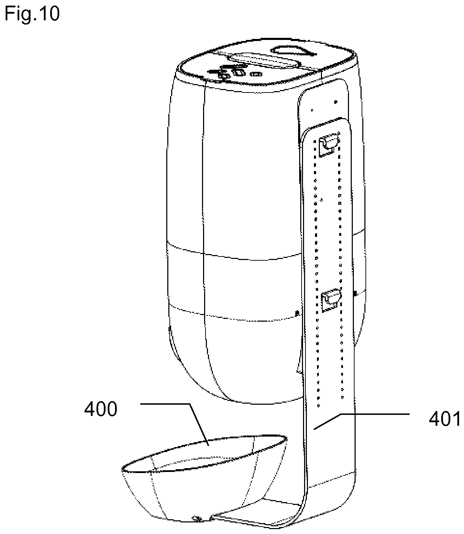

La figure 10 montre que le corps principal peut être positionné selon différentes altitudes par rapport à l'équerre 401, de sorte à pouvoir ajuster une hauteur entre le corps principal et le récipient de consommation 400, en fonction de la taille de l'animal à nourrir. A cet effet, une pluralité de trous sont prévus dans l'équerre 401, afin de pouvoir la visser à l'altitude adéquate dans des trous taraudés du corps principal. L'équerre 401 est quant à elle fixée à un mur par exemple pour maintenir en place l'appareil de préparation 500 et le récipient de consommation 400.

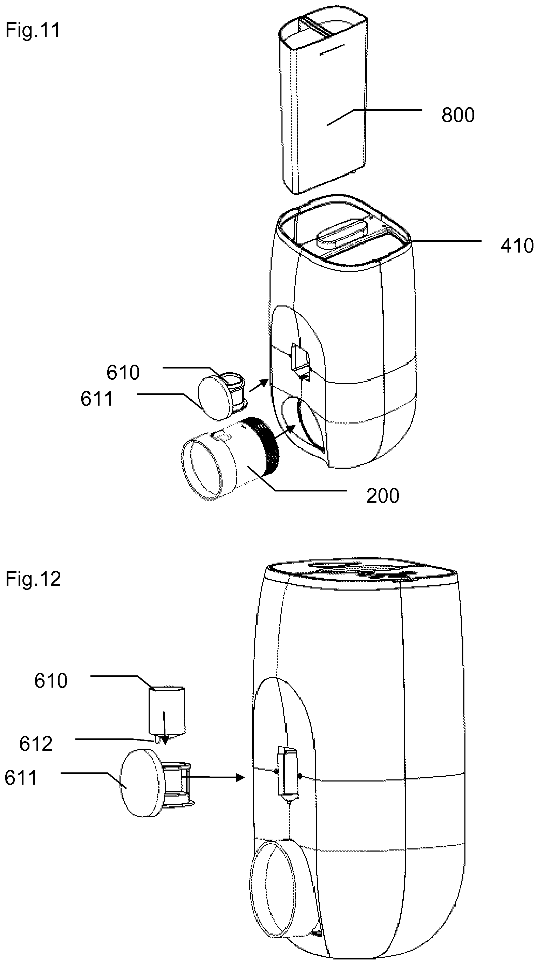

La figure 11 montre que l'appareil de préparation 500 peut recevoir de manière amovible plusieurs éléments dont un réservoir de liquide 800, une cartouche amovible 610 et une enceinte de mélange 200 dans laquelle sont mélangés au moins un liquide (de l'eau par exemple) et un aliment déshydraté pour former une ration alimentaire sous forme de pâtée qui sera ensuite distribuée dans le récipient de consommation 400. Un bac 410 est également prévu dans le corps de l'appareil de préparation 500, pour servir de moyens de stockage pour l'aliment déshydraté.

L'appareil de préparation 500 peut également recevoir de manière amovible la cartouche amovible 610 et son support 611, dont le montage extrêmement simple est montré figure 12. En effet, la cartouche amovible 610, qui contient un complément alimentaire à inclure si besoin dans les ingrédients à mélanger, peut être montée dans son support 611, et le sous-ensemble est ensuite encliqueté ou inséré dans le corps principal de l'appareil de préparation 500, au dessus de l'enceinte de mélange, pour pouvoir aisément inclure une quantité définie de complément alimentaire à la ration alimentaire pour l'animal, comme cela sera expliqué ultérieurement.

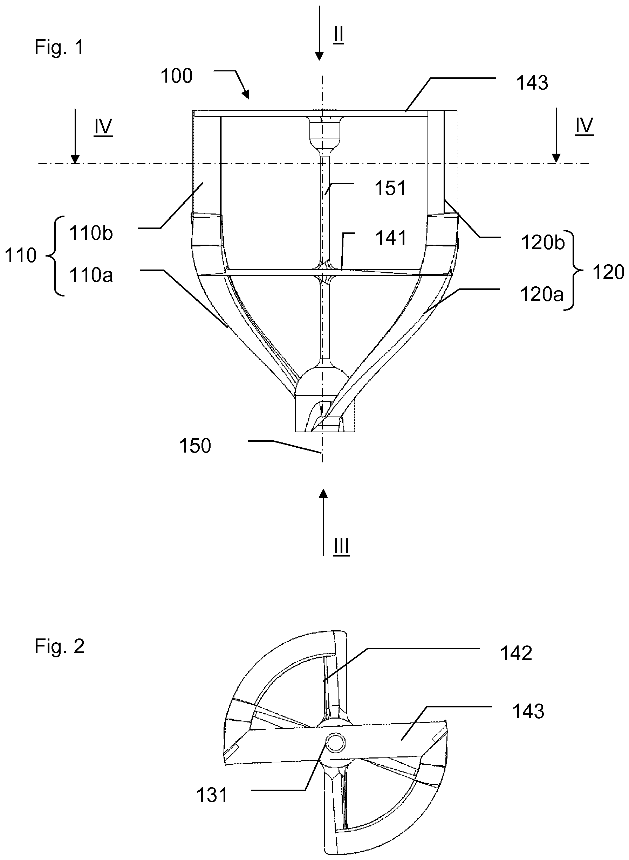

La figure 1 représente une pale de mélange 100 agencée pour être reçue dans l'enceinte de mélange 200 de l'appareil de préparation 500 selon la présente invention, qui comprend un premier bras excentré 110 et un deuxième bras excentré 120, tous deux excentrés par rapport à un axe de rotation 150, autour duquel la pale de mélange tourne lors de son utilisation dans l'appareil de préparation 500 d'aliment pour animaux.

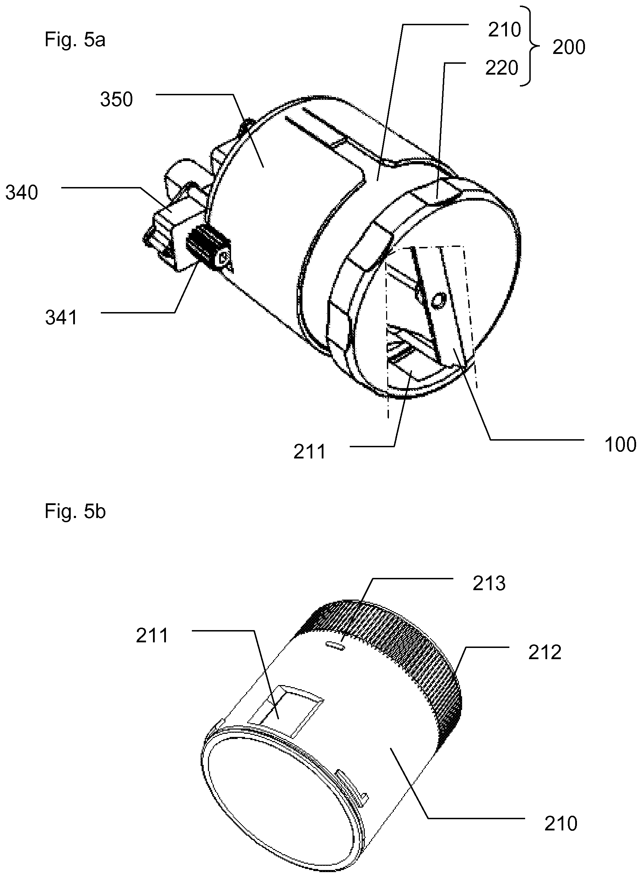

En effet, la pale de mélange 100 est agencée pour être reçue dans l'enceinte de mélange 200 (visible figures 5a, 6, 7 et 11) de l'appareil de préparation 500 (visible figure 6) d'aliment pour animaux, afin d'y mélanger des ingrédients tels qu'une portion d'un aliment déshydraté avec un liquide. A cet effet, il est prévu d'entraîner la pale de mélange 100 en rotation autour de l'axe de rotation 150, afin de mélanger tout d'abord l'aliment déshydraté avec un liquide tel que de l'eau, puis de malaxer ce mélange pour obtenir une pâte homogène, et la distribuer ensuite dans le récipient de consommation 400 (visible figure 6) accessible à l'animal pour qu'il puisse consommer cette pâtée tout juste préparée.

Pour revenir à la figure 1, chaque bras excentré 110 et 120 comprend une première portion 110a et 120a respectivement, inclinée par rapport à un plan contenant l'axe de rotation 150, afin de provoquer un mouvement des ingrédients contenus dans l'enceinte de mélange le long d'une première direction axiale (la direction II de la figure 1) lorsque la pale de mélange tourne dans un premier sens de rotation. Avantageusement, les premières portions 110a et 120a sont de forme hélicoïdale pour former une portion de vis d'Archimède. Ainsi, lorsque la pale de mélange tourne dans un deuxième sens de rotation opposé au premier sens de rotation, les premières portions 110a et 120a provoquent un mouvement des ingrédients contenus dans l'enceinte de mélange le long d'une deuxième direction axiale, la direction III de la figure 1.

De plus, chaque bras excentré 110 et 120 comprend une deuxième portion 110b et 120b respectivement, agencée en amont de la première portion 110a et 120a par rapport à la première direction axiale II, présentant une section transversale orientée radialement par rapport à l'axe de rotation 150 pour, lorsque la pale de mélange 100 tourne dans un deuxième sens de rotation, provoquer un mouvement radial vers l'extérieur de l'enceinte de mélange 200 des ingrédients contenus dans l'enceinte de mélange 200 et qui sont alors ramenés vers la deuxième portion 110b et 120b par la première portion110a et 120a.

En effet, l'invention propose de faire tourner la pale de mélange 100 selon deux sens de rotation contraires, en fonction du résultat à atteindre, comme cela est expliqué ci-dessous.

Comme montré figure 5a, l'enceinte de mélange 200 comprend un pot 210 fermé par un couvercle 220, la pale de mélange 100 étant agencée dans le pot 210 fermé par le couvercle 220. L'enceinte de mélange 200 comprend également un orifice 211 montré à travers le couvercle 220 par une coupe partielle. Comme on le voit figure 5a et 5b, l'orifice 211 est formé dans le pot, mais on peut envisager d'implanter l'orifice 211 dans le couvercle.

L'appareil de préparation 500 comprend un motoréducteur 340 avec un pignon 341 qui peut faire pivoter l'enceinte de mélange 200 lorsqu'elle est placée dans un logement 350 de l'appareil de préparation 500. Dans la suite de l'exposé, on considérera que le fond du pot 210 forme une première extrémité de l'enceinte de mélange 200, et le couvercle 220 est alors placé à une deuxième extrémité de l'enceinte de mélange 200.

Dans une première position, l'enceinte de mélange 200 est placée dans le logement 350 avec l'orifice 211 en haut de l'enceinte de mélange 200, de telle sorte que les ingrédients (l'aliment déshydraté, le liquide et un éventuel complément alimentaire) tombent par gravité dans l'enceinte de mélange 200, du côté de la deuxième extrémité donc.

Lors d'une première phase de préparation, il est donc prévu de faire tourner la pale de mélange 100 dans un premier sens de rotation pour que les ingrédients soient poussés ou déplacés par les premières portions 110a et 120a vers la première extrémité de l'enceinte de mélange 200 (selon la direction II de la figure 1 donc) pour éviter une accumulation des ingrédients au niveau de l'orifice 211.

Cette première phase de préparation peut durer plusieurs minutes, le temps de repousser les ingrédients vers le fond du pot 210 et les y mélanger et malaxer pour obtenir une pâte ou pâtée homogène et prête à consommer par l'animal. On peut également prévoir de stopper temporairement la rotation pour permettre au liquide de bien pénétrer l'aliment déshydraté. Pour mélanger efficacement les ingrédients, les premières portions 110a et 120a ont une section transversale allongée qui est sensiblement perpendiculaire à leur direction de déplacement, mais la longueur de cette section transversale est limitée à par exemple 12mm et plus particulièrement à 10mm, pour éviter tout encrassement autour de la pale de mélange. De plus, cette section transversale peut présenter une surface minimale de 20mm², ce qui lui confère une résistance adéquate.

On peut prévoir de fabriquer la pale de mélange 100 en acrylonitrile butadiène styrène ou ABS, en poly(oxyméthylène) (ou polyformaldéhyde), de sigle POM, ou encore en polyamide de sigle PA. On peut bien entendu prévoir d'ajouter des fibres de renfort dans la matière.

Une deuxième phase de préparation peut alors débuter, pour distribuer la pâtée dans le récipient de consommation 400. A cet effet, le motoréducteur 340, par l'intermédiaire du pignon 341 qui s'engage avec une portion dentée 212 du pot 210 (visible figure 5b), fait pivoter l'enceinte de mélange 200 dans le logement 350, pour amener l'orifice 211 en bas de l'enceinte de mélange.

A ce moment, en faisant tourner la pale de mélange 100 dans un deuxième sens de rotation (opposé au premier sens de rotation de la première phase de préparation), alors les ingrédients sont ramenés par les premières portions 110a et 120a vers la deuxième extrémité de l'enceinte de mélange, c'est-à-dire vers les deuxièmes portions 110b et 120b, situées en regard de l'orifice 211.

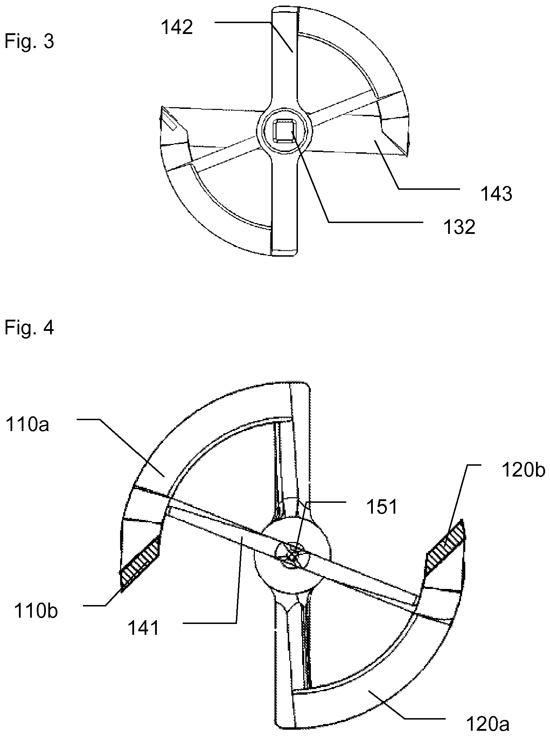

La section orientée des deuxièmes portions 110b et 120b, comme on peut le voir figure 4, a alors pour effet de repousser les ingrédients vers l'extérieur de l'enceinte de mélange, et de faire donc passer la pâtée par l'orifice 211, pour tomber par gravité dans le récipient de consommation 400 situé juste en dessous. La longueur des deuxièmes portions 110b et 120b est calculée pour qu'au moins une partie de ces deuxièmes portions 110b et 120b soient en regard de l'orifice 211.

Lorsqu'elle tourne dans le premier sens de rotation, la pale de mélange 100 a donc pour effet de déplacer les ingrédients vers la première extrémité de l'enceinte de mélange 200 et les y mélanger, et lorsqu'elle tourne dans le deuxième sens de rotation, la pale de mélange 100 a donc pour effet de déplacer les ingrédients vers la deuxième extrémité de l'enceinte de mélange 200 et les pousser au travers de l'orifice 211.

Comme visible figure 5a, les deuxièmes portions 110b et 120b sont ajustées au diamètre du pot 210, et afin de limiter les risques de coincement si des grains ou particules solides se trouvent dans la pâtée entre la pale de mélange 100 et le pot 210, il est prévu que les deuxièmes portions 110b et 120b soient au moins en partie souples, pour pouvoir se déformer, et "passer par-dessus ces grains ou particules solides". On peut donc prévoir une partie en silicone sur les deuxièmes portions 110b et 120b.

Comme représenté sur les figures 1, 2 et 3, la pale de mélange 100 comprend des pattes de liaison entre les bras excentrés 110 et 120 afin de procurer une bonne rigidité à la pale de mélange 100. En particulier, deux bras radiaux 142 et 143 sont prévus aux extrémités de la pale de mélange 100, pour joindre les bras excentrés 110 et 120 et une partie centrale de la pale de mélange 100.

De plus, une patte radiale 141 est prévue au centre de la pale de mélange 100, et une patte longitudinale 151 est prévue au niveau de l'axe de rotation 150 pour encore rigidifier l'ensemble et éviter les déformations par torsion ou flexion, qui pourraient conduire à un blocage de la pale de mélange 100 dans l'enceinte de mélange 200.

La figure 2 montre de plus un centrage 131 (un alésage) qui forme un ancrage pour assurer une liaison pivot de qualité avec l'enceinte de mélange 200 où un pion correspondant est agencé dans le couvercle 220.

La figure 3 montre enfin un carré d'entraînement 132 qui est agencé pour former un autre ancrage et s'engager avec un entraîneur de l'appareil de préparation 500, situé au fond du logement 350. On peut prévoir toute autre forme asymétrique à la place du carré d'entraînement 132 pour assurer l'entraînement de la pale de mélange 100, il suffit simplement une forme avec un blocage en rotation.

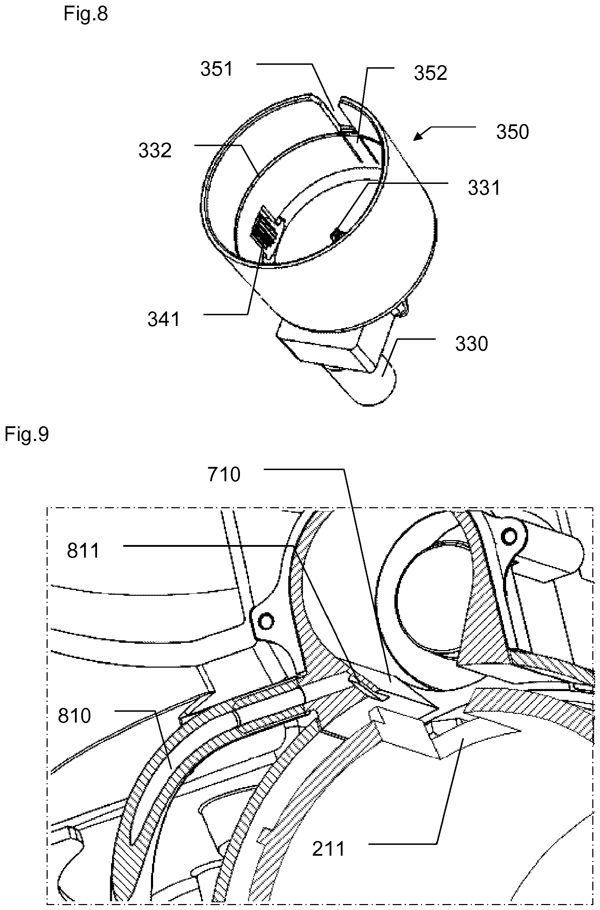

La figure 8 représente une vue en perspective de dessous du logement 350 de l'appareil de préparation 500. On y retrouve le motoréducteur 340 et son pignon 341, mais également un motoréducteur 330 agencé pour entraîner en rotation la pale de mélange 100 via un entraîneur 331 visible au fond du logement 350.

On voit aussi une fente 351 ménagée dans la paroi cylindrique du logement 350, pour laisser passer un ergot 213 (visible figure 5b) du pot 210, afin de garantir que l'orifice 211 se trouve en partie supérieure de l'enceinte de mélange 200, dès sa mise en place dans ou sur l'appareil de préparation 500.

La fente 351 se termine sur une languette ou patte flexible 352 qui comprend une portion d'une gorge 332 qui est agencée sur 360° sur la face interne du logement 350.

Lors de l'insertion de l'enceinte de mélange sur l'appareil de préparation 500, l'ergot 213 est donc guidé par la fente 351, et soulève la patte flexible 352, pour arriver dans la gorge 332. L'enceinte de mélange est donc solidaire du logement 350, l'orifice 211 étant en partie supérieure. La première phase de préparation peut commencer avec alimentation des ingrédients par gravité dans l'enceinte de mélange 200 et mélange avec la pale de mélange 100 qui tourne dans le premier sens de rotation.

Ensuite, la pale de mélange est stoppée, et l'enceinte de mélange 200 est pivotée par le motoréducteur 340 pour faire passer l'orifice 211 en partie inférieure de l'enceinte de mélange 200. Ce mouvement est permis et guidé par la gorge 332 qui accueille l'ergot 213.

L'enceinte de mélange 200 est stoppée en position de distribution, avec l'orifice 211 en position basse, la pale de mélange peut alors être mise en rotation selon le deuxième sens de rotation, pour expulser les ingrédients sous forme de pâtée par l'orifice 211. Ce dernier présente des bords biseautés pour éviter que la pâtée ne reste accrochée sur les bords de l'orifice 211.

Enfin, une fois l'enceinte de mélange 200 vide, la pale de mélange 100 peut à nouveau être stoppée, et l'enceinte de mélange 200 peut à nouveau être pivotée pour repasser en position de mélange. Une nouvelle préparation peut être lancée, ou l'enceinte de mélange 200 peut être retirée par l'utilisateur, car en saisissant la portion externe de l'enceinte de mélange 200 au capot (le couvercle 220 par exemple), la patte flexible peut libérer l'ergot 213.

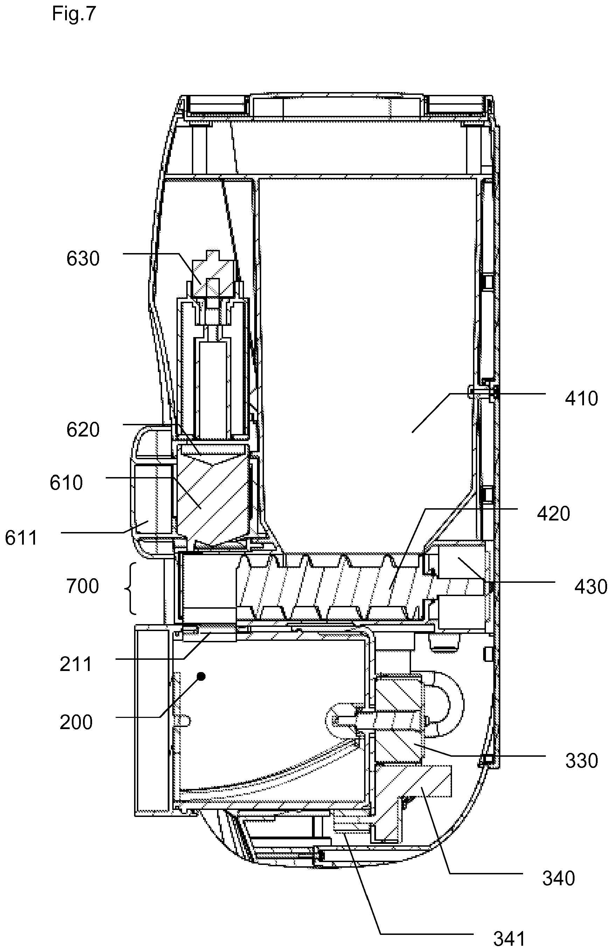

De retour à la figure 7, on peut voir le bac 410 qui forme des moyens de stockage de l'aliment déshydraté, avec une vis 420, qui peut être une vis hélicoïdale, accouplée à un moteur électrique 430, qui peut être un motoréducteur. La vis 420 est donc agencée pour prélever de l'aliment déshydraté dans le bac 410, et le transporter jusqu'à une zone de distribution 700, au dessus de l'orifice 211 (car l'enceinte de mélange 200 est dans la première position).

On voit aussi figure 7 la cartouche amovible 610 positionnée au dessus de la zone de distribution 700, et qui contient un complément alimentaire tel que des vitamines, des oligoéléments, des produits de santé (un produit vermifuge par exemple), afin de personnaliser et adapter la ration alimentaire à préparer, en fonction des besoins de l'animal. La cartouche amovible 610 contient un complément alimentaire idéalement sous forme liquide ou pâteuse, et l'appareil de préparation 500 comprend un moteur 630 agencé pour déplacer un piston 620, afin de forcer une quantité prédéterminée de complément alimentaire à tomber dans l'enceinte de mélange 200.

La cartouche amovible 610 est montée sur le support 611 qui permet de la recevoir et l'indexer via un pion d'indexage 612 (visible figure 12), pour la positionner correctement dans l'appareil de préparation 500.

Comme on le voit figure 11, l'appareil de préparation 500 comprend le réservoir de liquide 800, agencé pour former des moyens de stockage de liquide, et stocker de l'eau par exemple. Le réservoir de liquide 800 est monté amovible pour pouvoir être aisément rempli, lavé ou séché.

Le réservoir de liquide 800 est relié à un canal d'approvisionnement 810 dont on voit une extrémité aval 811 sur la figure 9. On voit sur cette figure en coupe une partie de l'orifice 211 et des parois 710 qui définissent la zone de distribution 700. L'extrémité aval 811 du canal d'approvisionnement 810 est donc positionnée au dessus de l'orifice 211, mais elle est aussi décalée par rapport aux parois 710, pour éviter tout contact ou ruissellement de l'eau sur les parois 710 de la zone de distribution, mais aussi avec les parois de l'orifice 211, ce qui évitera à l'aliment déshydraté de coller et salir ces parois. L'extrémité aval 811 est donc en regard de l'orifice 211, et elle est décalée par rapport à l'alimentation en aliment déshydraté et en complément alimentaire pour que ces trois ingrédients puissent être introduits en même temps dans l'enceinte de mélange 200 sans contact entre eux, pour éviter les salissures de la zone de distribution 700, qui n'est pas démontable.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Appareil de préparation (500) d'aliment pour animaux, comprenant :
- un boîtier,
- des moyens de stockage d'un aliment déshydraté,
- des moyens de stockage d'un liquide tel que de l'eau,
- une enceinte de mélange (200) agencée pour recevoir une portion d'aliment déshydraté et une portion de liquide,
- des moyens de mélange mobiles agencés dans l'enceinte de mélange (200) pour mélanger la portion d'aliment déshydraté et la portion de liquide pour former une ration alimentaire sous forme de pâte,
- un récipient de consommation (400) agencé pour recevoir la ration alimentaire,
dans lequel l'enceinte de mélange (200) est amovible par rapport à l'appareil de préparation (500),
**caractérisé en ce que** l'enceinte de mélange (200), une fois montée sur l'appareil de préparation (500) :
- est rotative par rapport à l'appareil de préparation (500) pour aller d'une position de mélange de la ration alimentaire à une position de distribution de la ration alimentaire, et
- présente une portion de préhension qui est agencée hors de l'appareil de préparation (500), en protubérance par rapport au boîtier.

2. Appareil de préparation (500) selon la revendication précédente, dans lequel la portion de préhension présente une symétrie de révolution

3. Appareil de préparation (500) selon l'une des revendications précédentes, dans lequel la portion de préhension est exempte de créneaux ou protubérances ponctuelles.

4. Appareil de préparation (500) selon l'une des revendications précédentes, dans lequel l'enceinte de mélange (200) comprend un orifice (211), et dans lequel :
- lorsque l'enceinte de mélange (200) est dans la position de mélange, l'orifice (211) est agencé en partie supérieure de l'enceinte de mélange (200),
- lorsque l'enceinte de mélange (200) est dans la position de distribution, l'orifice (211) est agencé en partie inférieure de l'enceinte de mélange (200).

5. Appareil de préparation (500) selon la revendication précédente, dans lequel l'enceinte de mélange (200) comprend un ergot (213), l'appareil de préparation (500) comprenant une fente agencée pour guider l'ergot (213) lors du montage de l'enceinte de mélange (200) sur l'appareil de préparation (500), pour forcer le montage de l'enceinte de mélange avec l'orifice (211) agencé en partie supérieure de l'enceinte de mélange (200).

6. Appareil de préparation (500) selon la revendication 5, comprenant une gorge (332) circulaire pour permettre la rotation de l'ergot (213) et prévenir tout démontage de l'enceinte de mélange (200).

7. Appareil de préparation (500) selon l'une des revendications précédentes, dans lequel l'enceinte de mélange (200) comprend une portion dentée (212), et dans lequel l'appareil de préparation (500) comprend des moyens d'entraînement de l'enceinte de mélange (200), avec un pignon (341) agencé pour s'engager avec la portion dentée (212).

8. Appareil de préparation (500) selon l'une des revendications précédentes, dans lequel l'appareil de préparation (500) comprend une pale de mélange (100) agencée dans l'enceinte de mélange (200) et mobile en rotation par rapport à l'enceinte de mélange (200).

9. Appareil de préparation (500) selon la revendication précédente, dans lequel l'enceinte de mélange (200) comprend deux ancrages formant une liaison pivot avec la pale de mélange (100).

10. Appareil de préparation (500) selon la revendication 9, l'appareil de préparation (500) comprenant un entraîneur (331) agencé pour entrainer la pale de mélange (100) en rotation, et dans lequel un des ancrages de l'enceinte de mélange (200) est agencé pour recevoir ledit entraîneur (331).

11. Appareil de préparation (500) selon l'une des revendications précédentes, dans lequel l'enceinte de mélange (200) comprend un couvercle (220).

## Patentansprüche

1. Gerät zur Zubereitung (500) von Futter für Tiere, umfassend:
- ein Gehäuse,
- Mittel zum Lagern eines dehydrierten Futters,
- Mittel zum Lagern einer Flüssigkeit wie Wasser,
- eine Mischkammer (200), die angeordnet ist, um einen Teil des dehydrierten Futters und einen Teil der Flüssigkeit aufzunehmen,
- Mischmittel, die beweglich in der Mischkammer (200) angeordnet sind, um den Teil des dehydrierten Futters und den Teil der Flüssigkeit zu mischen, um eine Futterration in Form eines Breis zu bilden,
- einen Verbrauchsbehälter (400), der zur Aufnahme der Futterration angeordnet ist,
wobei die Mischkammer (200) in Bezug auf das Gerät zur Zubereitung (500) entfernbar ist,
**dadurch gekennzeichnet, dass** die Mischkammer (200), sobald sie an dem Gerät zur Zubereitung (500) angebracht ist:
- relativ zu dem Gerät zur Zubereitung (500) drehbar ist, um von einer Mischposition der Futterration zu einer Verteilungsposition der Futterration zu gehen,
- einen Greifabschnitt vorweist, der außerhalb des Geräts zur Zubereitung (500) als Vorsprung mit Bezug auf das Gehäuse angeordnet ist.

2. Gerät zur Zubereitung (500) nach dem vorhergehenden Anspruch, wobei der Greifabschnitt eine Rotationssymmetrie aufweist

3. Gerät zur Zubereitung (500) nach einem der vorhergehenden Ansprüche, wobei der Greifabschnitt frei von punktuellen Lücken oder Vorsprüngen ist.

4. Gerät zur Zubereitung (500) nach einem der vorhergehenden Ansprüche, wobei die Mischkammer (200) eine Öffnung (211) umfasst und wobei:
- wenn die Mischkammer (200) in der Mischposition ist, die Öffnung (211) in dem oberen Teil der Mischkammer (200) angeordnet ist,
- wenn die Mischkammer (200) in der Verteilungsposition ist, die Öffnung (211) in dem unteren Teil der Mischkammer (200) angeordnet ist.

5. Gerät zur Zubereitung (500) nach dem vorhergehenden Anspruch, wobei die Mischkammer (200) einen Zapfen (213) umfasst, wobei das Gerät zur Zubereitung (500) einen Schlitz umfasst, der angeordnet ist, um den Zapfen (213) während der Montage der Mischkammer (200) an dem Gerät zur Zubereitung (500) zu führen, um die Montage der Mischkammer mit der im oberen Teil der Mischkammer (200) angeordneten Öffnung (211) zu erzwingen.

6. Gerät zur Zubereitung (500) nach Anspruch 5, umfassend eine kreisförmige Nut (332), um die Drehung des Zapfens (213) zu ermöglichen und eine Demontage der Mischkammer (200) zu verhindern.

7. Gerät zur Zubereitung (500) nach einem der vorhergehenden Ansprüche, wobei die Mischkammer (200) einen Zahnabschnitt (212) umfasst, und wobei das Gerät zur Zubereitung (500) Antriebsmittel für die Mischkammer (200) mit einem Ritzel (341) umfasst, das so angeordnet ist, dass es mit dem Zahnabschnitt (212) in Eingriff steht.

8. Gerät zur Zubereitung (500) nach einem der vorhergehenden Ansprüche, wobei das Gerät zur Zubereitung (500) eine Mischschaufel (100) umfasst, die in der Mischkammer (200) angeordnet und relativ zu der Mischkammer (200) drehbar ist.

9. Gerät zur Zubereitung (500) nach dem vorhergehenden Anspruch, wobei die Mischkammer (200) zwei Anker umfasst, die eine Schwenkverbindung mit der Mischschaufel (100) bilden.

10. Gerät zur Zubereitung (500) nach Anspruch 9, wobei das Gerät zur Zubereitung (500) einen Mitnehmer (331) umfasst, der angeordnet ist, um die Mischschaufel (100) in Drehung anzutreiben, und wobei einer der Anker der Mischkammer (200) angeordnet ist, um den Mitnehmer (331) aufzunehmen.

11. Gerät zur Zubereitung (500) nach einem der vorhergehenden Ansprüche, wobei die Mischkammer (200) eine Abdeckung (220) umfasst.

## Claims

1. Device for preparing (500) food for animals, comprising:
- a casing,
- means for storing a dehydrated food,
- means for storing a liquid such as water,
- a mixing chamber (200) arranged to receive a dehydrated food portion and a liquid portion,
- mobile mixing means arranged in the mixing chamber (200) to mix the dehydrated food portion and the liquid portion to form a food ration in the form of paste,
- a consumption container (400) arranged to receive the food ration,
wherein the mixing chamber (200) is removable with respect to the preparation device (500),
**characterised in that** the mixing chamber (200), once mounted on the preparation device (500):
- rotates with respect to the preparation device (500) to go from a position for mixing the food ration to a position for distributing the food ration, and
- has a gripping portion which is arranged outside of the preparation device (500), protruding with respect to the casing.

2. Preparation device (500) according to the preceding claim, wherein the gripping portion has a symmetry of revolution.

3. Preparation device (500) according to one of the preceding claims, wherein the gripping portion has no specific slots or protrusions.

4. Preparation device (500) according to one of the preceding claims, wherein the mixing chamber (200) comprises an orifice (211), and wherein:
- when the mixing chamber (200) is in the mixing position, the orifice (211) is arranged in the upper portion of the mixing chamber (200),
- when the mixing chamber (200) is in the distribution position, the orifice (211) is arranged in the lower portion of the mixing chamber (200).

5. Preparation device (500) according to the preceding claim, wherein the mixing chamber (200) comprises a lug (213), the preparation device (500) comprising a slot arranged to guide the lug (213) during the mounting of the mixing chamber (200) on the preparation device (500), to force the mounting of the mixing chamber with the orifice (211) arranged in the upper portion of the mixing chamber (200).

6. Preparation device (500) according to claim 5, comprising a circular recess (332) to make it possible for the rotation of the lug (213) and to prevent any dismounting of the mixing chamber (200).

7. Preparation device (500) according to one of the preceding claims, wherein the mixing chamber (200) comprises a toothed portion (212), and wherein the preparation device (500) comprises means for driving the mixing chamber (200), with a pinion (341) arranged to be engaged with the toothed portion (212).

8. Preparation device (500) according to one of the preceding claims, wherein the preparation device (500) comprises a mixing blade (100) arranged in the mixing chamber (200) and mobile in rotation with respect to the mixing chamber (200).

9. Preparation device (500) according to the preceding claim, wherein the mixing chamber (200) comprises two anchorages forming a pivot connection with the mixing blade (100).

10. Preparation device (500) according to claim 9, the preparation device (500) comprising a driver (331) arranged to rotate the mixing blade (100), and wherein one of the anchorages of the mixing chamber (200) is arranged to receive said driver (331).

11. Preparation device (500) according to one of the preceding claims, wherein the mixing chamber (200) comprises a cover (220).
